Europäisches Patentamt

European Patent Office

Office européen des brevets

(19)

(11) Veröffentlichungsnummer: **0 213 222**
**B1**

(12) **EUROPÄISCHE PATENTSCHRIFT**

(45) Veröffentlichungstag der Patentschrift:
**29.03.89**

(51) Int. Cl.⁴: **H04N 5/60**

(21) Anmeldenummer: **85110735.9**

(22) Anmeldetag: **27.08.85**

(54) Fernsehtonempfangsschaltung für mindestens einen in einem HF-signal enthaltenen Tonkanal.

(43) Veröffentlichungstag der Anmeldung:
**11.03.87 Patentblatt 87/11**

(45) Bekanntmachung des Hinweises auf die Patenterteilung:
**29.03.89 Patentblatt 89/13**

(84) Benannte Vertragsstaaten:
**DE FR GB IT NL**

(56) Entgegenhaltungen:
**EP-A- 0 146 749**
**DE-A- 2 843 977**

**FUNKSCHAU, Band 57, Nr. 5, März 1985, Seiten 57-60, München, DE; "FS-Stereo- und Zweiton-Übertragung, Teil 2"**

(73) Patentinhaber: **Deutsche ITT Industries GmbH, Hans-Bunte-Strasse 19 Postfach 840, D-7800 Freiburg(DE)**

(72) Erfinder: **Gassmann, Gerhard Günter, Dipl.-Ing., Vogelsang 5, D-7266 Neuweiler-Agenbach(DE)**
Erfinder: **Schat, Hermannus, Habichtweg 26, D-7800 Freiburg I.Br.(DE)**
Erfinder: **Elmis, Herbert, Ing. grad., Berliner Strasse 86, D-7809 Denzlingen(DE)**
Erfinder: **Novotny, Bernd, Ing. grad., Belchenstrasse 12, D-7803 Gundelfingen(DE)**
Erfinder: **Kappeler, Otmar, Dipl.-Ing., Zähringerstrasse 22, D-7844 Neuenburg(DE)**
Erfinder: **Ehrhardt, Dietmar, Dr. Ing., Fliederweg 10, D-7800 Freiburg I.Br.(DE)**

## Beschreibung

Die Erfindung betrifft eine Fernsehtonempfangsschaltung für mindestens einen tonträgerfrequent übertragenen und in einem HF-Signal enthaltenen Tonkanal, das außerdem ein mittels eines Bildträgers und eines Farbträgers senderfrequent übertragenes FBAS-Signal (= Farb-Bild-Austast-Synchron-Signalgemisch) enthält, mit einer Kanaltrennschaltung, vgl. den Oberbegriff des Patentanspruchs 1.

Derartige Schaltungen sind in großer Vielfalt in üblichen Fernsehempfängern realisiert und auch ausführlich beschrieben, vgl. z.B. das Buch von O. Limann "Fernsehtechnik ohne Ballast", 13. Auflage, München 1979, Seiten 86 bis 91. Bei diesen beschriebenen Schaltungen gibt es verschiedene systembedingte Störquellen des Tonsignals. Eine davon ist der sogenannte Intercarrierbrumm, der bekanntlich durch ungewollte Bildträger-Phasenmodulation auftritt, die vor allem bei der Frequenzumsetzung in Hilfssendern kaum zu vermeiden ist. Die Phasenmodulation des Bildträgers wird dabei auf das Tonsignal übertragen, wobei die störende 5,5-MHz-Frequenz durch Mischung zwischen dem Bild- und dem Tonträger entsteht. Der Intercarrierbrumm tritt vor allem dann besonders störend auf, wenn Schriften mit hohem Hell-Dunkel-Kontrast in das Bild eingeblendet sind. Diese Schrift stellt im Videofrequenzspektrum eine bestimmte Videofrequenz mit einer hohen Amplitude dar, die durch Mischung mit dem Bildträger in den 5,5-MHz-Frequenzbereich gelangt.

Eine andere Störquelle ist die Rückwirkung der Empfänger-Feinabstimmung auf die Lautstärke, die soweit gehen kann, daß bei einer Abstimmungseinstellung, die zur Synchronisierung eines schwach einfallenden Fernsehsignals erforderlich ist, wegen des festliegenden schmalbandigen Tonfilterbereichs gar keine Tonwiedergabe erfolgt.

Die gemeinsame Beseitigung dieser beiden Störquellen ist bei bisherigen Schaltungen mit vertretbarem Schaltungsaufwand nicht möglich.

In der DE-A 2 843 977 ist eine weitere Fernsehtonempfangsschaltung beschrieben, die mittels einer Hochfrequenzmischung das hochfrequent übertragene Fernsehsignal in die Zwischenfrequenzlage umsetzt, so daß der zwischenfrequente Bildträger bei 38,9 MHz und der zwischenfrequente Tonträger bei 33,4 MHz liegen. An einer ZF-Filterschaltung mit den Bezugszeichen 11, 12, 13, 15 wird ein Kompositsignal abgegriffen, das im wesentlichen Signalanteile aus dem Bereich des eigenen Bild- und Tonträgers enthält; alle anderen Bereiche sowie der Zwischenbereich sind unterdrückt, besonders die Frequenzen der Bild- und Tonträger der beiden Nachbarkanäle bei 31,9 MHz bzw. 40,4/41,4 MHz. Mittels der weiteren Filterschaltung (dort: 29) wird aus dem Kompositsignal der Bildträger bei 38,9 MHz gewonnen, um 90° in der Phase gedreht und in der Amplitude begrenzt, um als Schaltsignal den einzigen Mischer (dort: 33) anzusteuern. Dessen Signaleingang ist das verstärkte Kompositsignal zugeführt. Der Ausgang dieses Mischers enthält in den Mischungssignalen

den eigentlichen frequenzmodulierten Tonkanal bei 5,5 MHz, der mittels eines nachgeschalteten schmalbandigen Bandpasses mit einer Bandbreite von 150 kHz herausgefiltert wird. Der Tonkanal bei 5,5 MHz entsteht dabei als Differenzfrequenz bei der Mischung des zwischenfrequenten Tonkanals (bei 33,4 MHz) mit dem Schaltsignal von 38,9 MHz. Der Bandpaß trennt den Tonkanal von den anderen störenden Mischungssignalen, nämlich dem Summensignal und den eventuell zusätzlich vorhandenen Mischungssignalen höherer Ordnung. Der in den Frequenzursprung transformierte Bildträger tritt als Gleichpegel am Ausgang des Mischers nicht auf, weil das Schaltsignal gegenüber dem Trägeranteil im Kompositsignal um 90° in der Phase gedreht ist. Ein sich daran anschließender Frequenzdemodulator erzeugt aus dem herausgefilterten Tonkanal das eigentliche Tonsignal in gehörrichtiger Frequenzlage. Bei dieser Fernsehtonempfangsschaltung handelt es sich also um ein Einseitenbanddemodulationsverfahren nach der "Filtermethode" und nicht nach der "Phasenmethode" wie bei der Erfindung.

Es ist daher Aufgabe der in den Ansprüchen gekennzeichneten Erfindung, eine Fernsehtonempfangsschaltung anzugeben, welche die geschilderten Nachteile nicht aufweist. Ferner sollen durch die Erfindung die halbleitertechnische Integrierbarkeit verbessert, der Wegfall von Abgleichschritten am späteren Fernsehgerät sowie die Reduzierung von Bauelementen oder Schaltungsgruppen im Fernsehgerät ermöglicht werden.

Die Erfindung geht von dem Gedanken aus, eine Einseitenbanddemodulatorschaltung nach der "Phasenmethode", wie sie in dem Buch von H. Meinke und F. W. Gundlach, "Taschenbuch der Hochfrequenztechnik", 2. Auflage, Berlin 1962, Seiten 1497 bis 1500 beschrieben ist, für die Demodulation des senderfrequent übertragenen und im Fernsehsignal enthaltenen Tonsignals, das aus einem oder zwei Tonkanälen bestehen kann, nutzbar zu machen.

Die Erfindung und vorteilhafte Weiterbildungen werden anhand der Figuren der Zeichnung näher erläutert, die zum Teil bei Erfindung verwendete Teilschaltungen zeigen.

Fig. 1 zeigt als Blockschaltbild ein Ausführungsbeispiel einer Kanaltrennschaltung,

Fig. 2 zeigt als Blockschaltbild ein Ausführungsbeispiel eines Umsetzers und einer Kombinationsschaltung,

Fig. 3 zeigt ein weiteres Ausführungsbeispiel der Kombinationsschaltung,

Fig. 4 zeigt schematisch die Zusammenschaltung eines Hochfrequenzmischers, eines Einseitenbandmischers und der Kanaltrennschaltung,

Fig. 5 zeigt als Blockschaltbild ein Ausführungsbeispiel des Umsetzers und der Kanaltrennschaltung mit gemeinsamer Digitalisierung von Bild- und Tonverarbeitung und mit anschließender Signaltrennung,

Fig. 6 zeigt in schematischer Form die Signalspektren einiger Signale der Kanaltrennschaltung, und

Fig. 7 zeigt in schematischer Form die Signalspektren einiger Signale verschiedener Ausführungsbeispiele der Gesamtschaltung.

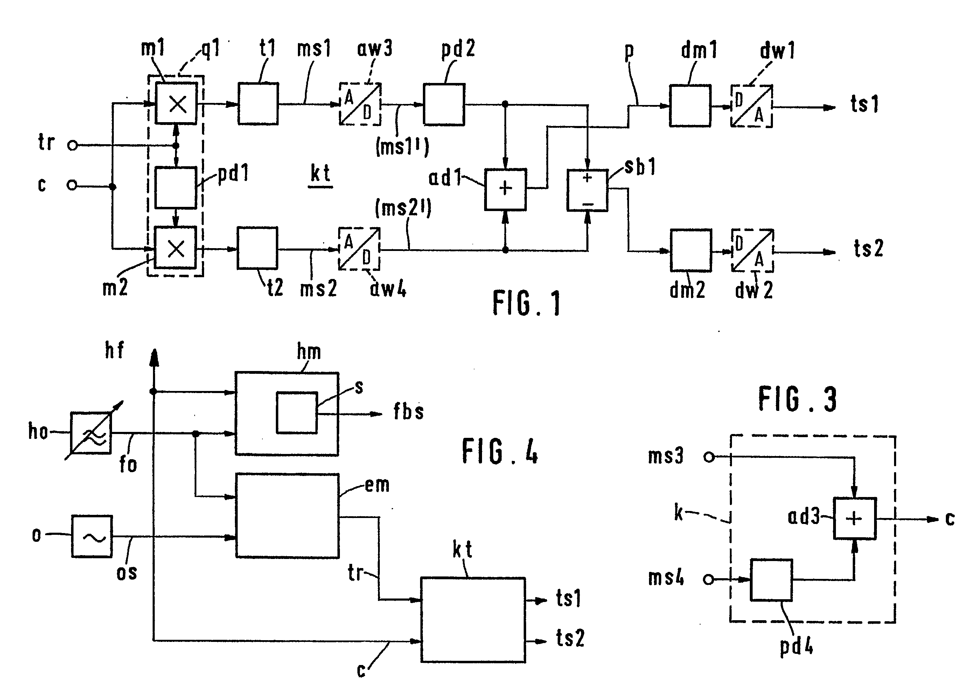

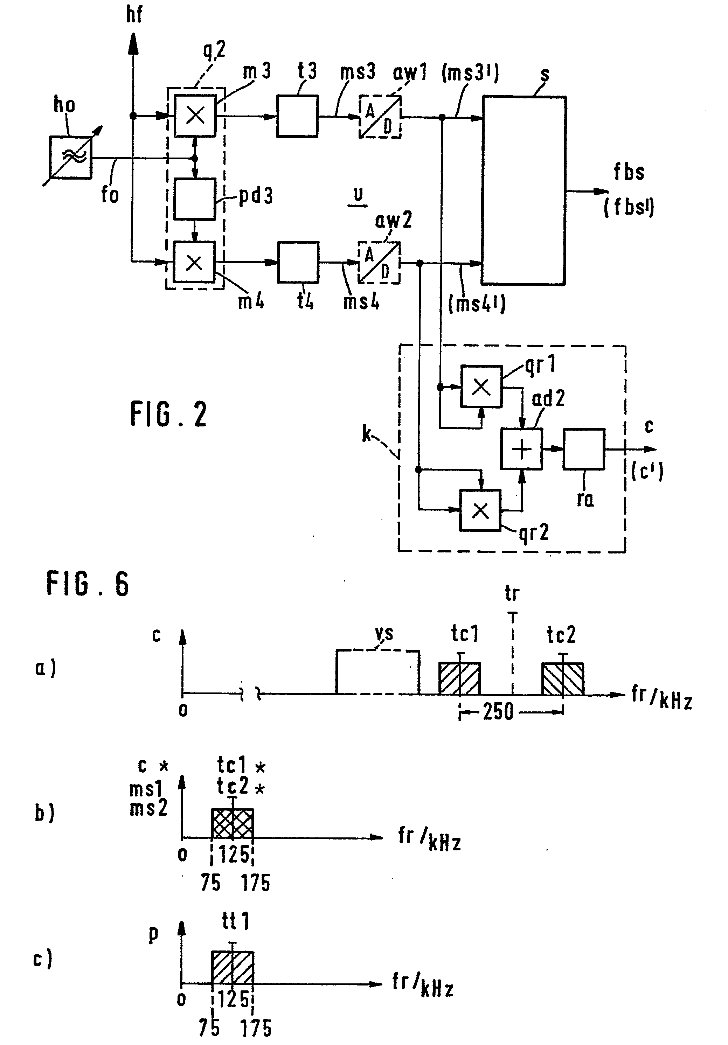

Fig. 1 zeigt in Form eines Blockschaltbildes ein Ausführungsbeispiel der Kanaltrennschaltung kt, welche der Trennung des ersten und des zweiten Tonkanals aus dem HF-Signal dient und in gehörrichtiger Frequenzlage das Tonsignal ts1 des ersten bzw. das Tonsignal ts2 des zweiten Tonkanals abgibt.

Als Eingangssignale der Kanaltrennschaltung kt dienen das Kompositsignal c und das Trennsignal tr. Dieses ist nur bezüglich seiner Frequenz von Bedeutung, während das Kompositsignal c ein Signalgemisch in unterschiedlicher Frequenzlage ist, das aber in jedem Fall den ersten Komposittonträger tc1 und ggf. den zweiten Komposittonträger tc2 enthält.

Die Kanaltrennschaltung kt enthält eingangsseitig den ersten Quadraturmodulator q1 mit der ersten Phasendrehstufe pd1 und mit der ersten bzw. der zweiten Mischereinheit m1, m2. Als zu mischende Signale sind der ersten und der zweiten Mischereinheit m1, m2 das Kompositsignal c zugeführt, während das Trennsignal tr der ersten Mischereinheit m1 direkt und der zweiten Mischereinheit m2 über die erste Phasendrehstufe pd1 zugeführt ist.

Quadraturmodulatoren erzeugen bekanntlich aus einem Eingangssignal zwei zueinander um möglichst exakt 90° phasenverschobene Ausgangssignale, was durch die Phasendrehstufe erreicht wird, die um 90° die Phase dreht.

Am ersten bzw. am zweiten Ausgang des ersten Quadraturmodulators q1 ist der erste bzw. der zweite Tiefpaß t1, t2 angeschlossen, dessen Ausgangssignal das erste bzw. das zweite Mischungssignal ms1, ms2, ist das ggf. in einem nachgeschalteten Verstärker verstärkt ist. Der Durchlaßbereich des ersten bzw. des zweiten Tiefpasses t1, t2 entspricht mindestens der Bandbreite jeweils eines um seinen Tonträger tt1; tt2 im Basissignal f frequenzmodulierten Tonkanals, wobei der Sperrbereich so bemessen ist, daß störende Nachbarsignale unterdrückt sind.

Beim PAL-Farbfernseh-Standard und dem deutschen Fernsehton- Stereo-Standard liegt der erste (frequenzmodulierte) Tonträger tt1 des Basissignals f bei einer Frequenz von 5,5 MHz. Der Frequenzhub dieses Tonträgers tt1 beträgt +/- 50 kHz. Ein eventuell vorhandener zweiter Tonträger tt2 liegt bei einer Frequenz von ca. 5,75 MHz, wobei der Frequenzhub ebenfalls +/- 50 kHz beträgt.

Das erste Mischungssignal ms1 speist die um 90° drehende, zweite Phasendrehstufe pd2, deren Ausgang mit dem ersten Eingang bzw. dem Minuend-Eingang des ersten Addierers ad1 bzw. des ersten Subtrahierers sb1 verbunden ist, dessen zweiter Eingang bzw. dessen Subtrahend-Eingang mit dem zweiten Mischungssignal ms2 gespeist ist.

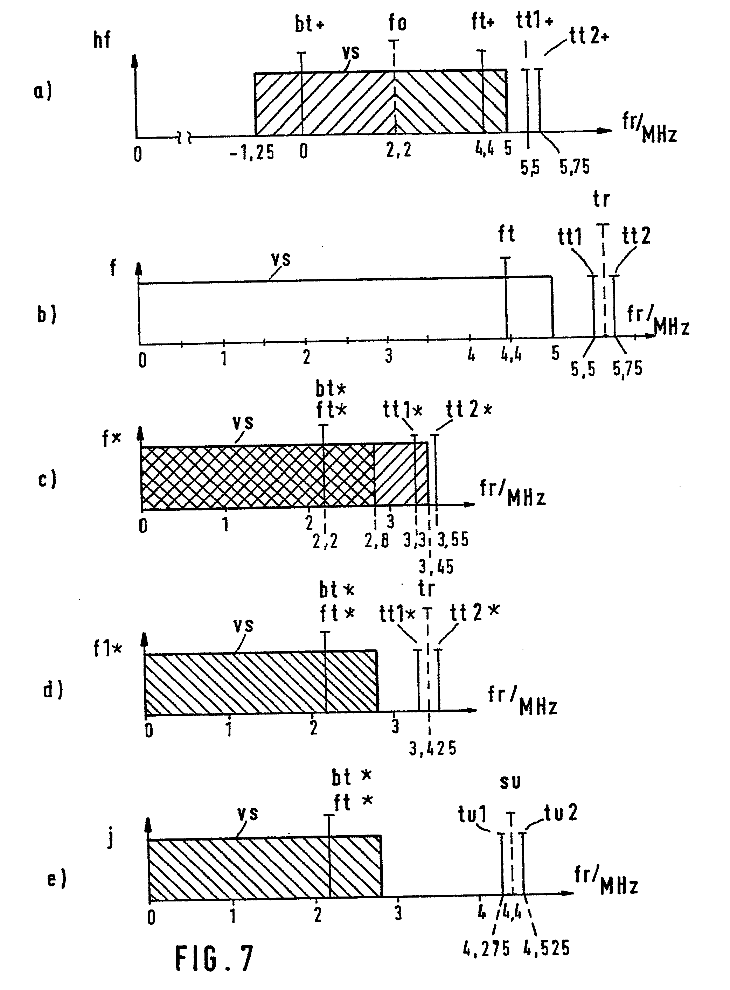

Der Ausgang des ersten Addierers ad1, der das Addiersignal p (vgl. Fig 6c) abgibt, ist mit dem Eingang des ersten Frequenzdemodulators dm1 und der Ausgang des ersten Subtrahierers sb1 ist mit dem des zweiten Frequenzdemodulators dm2 verbunden, deren jeweiliges Ausgangssignal das erste bzw. das zweite Tonsignal ts1, ts2 des ersten bzw. des zweiten Tonkanals in gehörrichtiger Frequenzlage ist.

In vorteilhafter Ausgestaltung der Erfindung bietet sich zur Digitalisierung, die in Fig. 1 durch die gestrichelt gezeichneten Teilschaltungen angegeben ist, eine Schnittstelle hinter dem ersten bzw. hinter dem zweiten Tiefpaß t1, t2 an, weil das erste bzw. das zweite Mischungssignal ms1, ms2 eine obere Grenzfrequenz von etwa 200 kHz aufweist. Die Digitalisierung erfolgt synchron mit dem Systemtakt cl oder einem daraus abgeleiteten niederfrequenteren Signal, der in Fernsehempfängern mit digitaler Bildsignalverarbeitung bereits üblich ist und dort wie auch bei der Erfindung bevorzugt gleich dem Vierfachen der Farbträgerfrequenz, also bei PAL gleich 17,7 MHz, ist. Das erste bzw. das zweite digitalisierte Mischungssignal ms1′, ms2′ ist dann den zuvor beschriebenen Teilschaltungen, die dann entsprechende Digital-Teilschaltungen sind, zugeführt. Zur Erzeugung des analogen ersten bzw. zweiten Tonsignals ts1, ts2 ist nach dem ersten bzw. dem zweiten Frequenzdemodulator dm1, dm2 eine Rückwandlung in dem ersten bzw. zweiten Digital-Analog-Wandler dw1, dw2 erforderlich.

Der erste bzw. der zweite Frequenzdemodulator dm1, dm2 enthält in seiner digitalen Ausführungsform einen Arcus-Tangens-Bildner, dem das in der Frequenz zu demodulierende Signal einmal direkt und einmal über eine Verzögerungsschaltung zugeführt ist. Das Ausgangssignal ist der Arcus-Tangenswert, der aus diesen beiden Eingangswerten gebildet wird.

Die Frequenz des Trennsignals tr ist so eingestellt, daß sie bei vorhandenem erstem und zweitem Komposittonträger tc1, tc2 etwa in der Mitte zwischen deren Frequenzen liegt. Bei allein vorhandenem erstem Komposittonträger tc1 hat die Frequenz des Trennsignals tr diese gleiche Frequenzablage gegenüber dem ersten Komposittonträger tc1.

Fig. 2 zeigt als Blockschaltbild die Zusammenschaltung des Umsetzers u und der Kombinationsschaltung k. Im Umsetzer u wird das HF-Signal hf in der Frequenz mittels des Oszillatorsignals fo umgesetzt, so daß das FBAS-Signal fbs in der Basisbandlage und mittels der Kombinationsschaltung k das Kompositsignal c erzeugt werden.

Der Eingang des Umsetzers u enthält den zweiten Quadraturmodulator q2 mit der dritten bzw. der vierten Mischereinheit m3, m4 und mit der dritten Phasendrehstufe pd3. Dem ersten Eingang der dritten bzw. der vierten Mischereinheit m3, m4 ist das HF-Signal hf zugeführt. Der zweite Eingang der dritten Mischereinheit m3 ist mit dem Oszillatorsignal fo direkt und der zweite Eingang der vierten Mischereinheit m4 mit dem Oszillatorsignal fo über die Phasendrehstufe pd3 gespeist. Das Oszillatorsignal fo ist das Ausgangssignal des Oszillators ho, der in der Frequenz durchstimmbar ist und dessen Durchstimmbereich etwa bis in den Frequenzbereich des HF-Signals hf reicht.

Der dritte bzw. der vierte Tiefpaß t3, t4 ist am Ausgang der dritten bzw. der vierten Mischereinheit m3, m4 angeschlossen und erzeugt als Ausgangssignal das dritte bzw. das vierte Mischersignal ms3, ms4, das ggf. verstärkt ist und die Signalverarbeitungsstufe s speist, welche das FBAS-Signal fbs in der üblichen Basisbandlage als Ausgangssignal erzeugt.

Der Durchlaßbereich des dritten bzw. des vierten Tiefpasses t3, t4 ist etwa gleich der Bandbreite des Faltungssignals f*, und der jeweilige Sperrbereich ist so bemessen, daß die Nachbarkanäle des Fernsehsignals normgerecht weit abgesenkt sind. Das Faltungssignal f* ist in Fig. 7c gezeigt und unten näher erläutert.

Das dritte Mischungssignal ms3 bzw. das vierte Mischungssignal ms4 speisen ferner den ersten bzw. den zweiten Quadrierer qr1, qr2 im Eingang der Kombinationsschaltung k. Die Ausgänge der beiden Quadrierer qr1, qr2 sind jeweils mit einem Eingang des zweiten Addierers ad2 verbunden, dessen Ausgangssignal dem Radizierer ra zugeführt ist, der als Ausgangssignal das Kompositsignal c erzeugt. Dieses dient auch als Ausgangssignal der Kombinationsschaltung k und ist mit dem Basissignal f identisch.

Eine vorteilhafte Betriebsweise für den Umsetzer u und die Kanaltrennschaltung kt besteht darin, daß die Frequenz des Oszillators ho und dessen Oszillatorsignals fo innerhalb des HF-Signalspektrums etwa in der Mitte zwischen dem senderfrequenten Bildträger bt+ und dem senderfrequenten Farbträger ft+ liegt. Das dritte bzw. das vierte Mischungssignal ms3, ms4 ist dann das Faltungssignal f*, das sozusagen das um die Frequenz des Oszillatorsignals fo "gefaltete" HF-Signal ist. Das Oszillatorsignal fo "verschwindet" dabei, weil es durch den Faltungsprozeß in den Frequenzursprung 0 Hz transformiert ist.

Der Frequenzbereich ab 0 Hz ist jedoch teilweise doppelt belegt, und zwar reicht die ehemals untere Hälfte des Spektralbereichs mit dem Restseitenband durch die Faltung in den Frequenzbereich zwischen dem ersten und dem zweiten transformierten Tonträger tt1*, tt2* hinein. Der ursprünglich obere Bereich des Videosignalspektrums reicht nach der Faltung bis 2,8 MHz und der sich durch die Faltung daran anschließende erste bzw. zweite transformierte Tonträger tt1*, tt2* liegt bei 3,3 MHz bzw. 3,55 MHz. Ferner liegen durch die Faltung bedingt im Faltungssignal f* der transformierte Bildträger bt* und der transformierte Farbträger ft* bei einer Frequenz von 2,2 MHz, vgl. unten die Erläuterungen zu Fig. 7c.

Wegen der Frequenzlage des dritten bzw. des vierten Mischungssignals ms3, ms4, die sich aus der oben genannten Faltung ergibt, ist es wiederum vorteilhaft, sie mit einem Systemtakt von etwa der vierfachen Frequenz des Farbhilfsträgers ft zu digitalisieren. Die geeigneten Schnittstellen im Umsetzer u sind der Ausgang des dritten bzw. des vierten Tiefpasses t3, t4, an den der erste bzw. der zweite Analog-Digital-Wandler aw1, aw2 (gestrichelt gezeichnet) angeschlossen ist, dessen Ausgangssignal das dritte bzw. das vierte digitalisierte Mischungssignal ms3', ms4' ist. Die darauf folgenden Teilschaltungen arbeiten digital und erzeugen das digitalisierte FBAS-Signal fbs' und das digitalisierte Kompositsignal c'.

Bei der Digitalisierung der vier Mischungssignale ms1, ms2, ms3, ms4 mittels der vier Analog-Digital-Wandler aw1, aw2, aw3, aw4 ergibt sich als weiterer Vorteil, daß der jeweils vorangehend zugeordnete Tiefpaß t1, t2, t3, t4 jeweils ein leicht zu realisierender analoger Vorselektor mit geringen Toleranzeigenschaften sein kann, wenn als eigentlicher Tiefpaß ein digitaler Tiefpaß dem jeweiligen Analog-Digital-Wandler nachgeschaltet ist. Kritische Toleranzen bzw. spezielle Frequenzverläufe lassen sich in digitaler Form einfacher oder überhaupt erst realisieren.

Bei einer Abwandlung bzw. Ausgestaltung der Erfindung, die in der Zeichnung nicht dargestellt ist, ist der Umsetzer u eine Zwischenfrequenz-Mischerschaltung, die das HF-Signal hf als Kompositsignal c in einen Zwischenfrequenzbereich umsetzt, der zwischen dem Frequenzbereich des HF-Signals hf und dem des Basissignals f liegt.

Die Fig. 3 stellt ein weiteres Ausführungsbeispiel der Kombinationsschaltung k dar. Das dritte Mischungssignal ms3 speist den ersten Eingang des dritten Addierers ad3. Dessen zweiter Eingang ist mit dem Ausgang der um 90° drehenden, vierten Phasendrehstufe pd4 verbunden, deren Eingang das vierte Mischungssignal ms4 zugeführt ist.

Das Ausgangssignal des dritten Addierers ad3 ist das Kompositsignal c, das bei dieser Schaltungsanordnung die eine Spektralhälfte f1* des Faltungssignals f* ist, welches den ersten und den zweiten transformierten Tonträger tt1*, tt2* enthält, vgl. unten die Erläuterungen zu Fig. 7d.

Anstelle des dritten Addierers ad3 kann auch ein weiterer Subtrahierer vorgesehen werden, dessen Minuend-Eingang das dritte Mischungssignal ms3 zugeführt ist.

Fig. 4 zeigt in schematischer Form die Zusammenschaltung des Hochfrequenzmischers hm, des Einseitenbandmischers em und der Kanaltrennschaltung kt. Das HF-Signal hf speist den HF-Eingang des Hochfrequenzmischers hm und den Kompositsignaleingang der Kanaltrennschaltung kt. Das Oszillatorsignal fo des Oszillators ho ist mit dem jeweils zugehörigen Eingang des Hochfrequenzmischers hm und des Einseitenbandmischers em verbunden. Das Mischungsoszillatorsignal os des Mischungsoszillators o speist den anderen zugehörigen Eingang des Einseitenbandmischers em, dessen Ausgangssignal, das Trennsignal tr, der Kanaltrennschaltung kt zugeführt ist.

Der Mischungsoszillator o ist ein Festfrequenzoszillator, aus dessen Frequenz zusammen mit der des frequenzvariablen Oszillators ho im Einseitenbandmischer em eine Summenfrequenz gebildet ist, welche die Frequenz des Trennsignals tr ergibt. Die Frequenz des Mischungsoszillators o ist etwa die Mittenfrequenz zwischen der Frequenz des ersten und des zweiten transformierten Tonträgers tt1*, tt2* im Faltungssignal f*, wobei der zweite transformierte Tonträger tt2* real nicht vorhanden zu sein braucht, sich jedoch z.B. aus einem Fernsehton-Stereo- oder -Zwei-Tonkanal-Standard ergibt.

Das Oszillatorsignal fo dient dazu, das HF-Signal hf in der Frequenz zu erniedrigen. Der Oszillator ho ist dabei vorteilhaft auf eine Frequenz eingestellt, die etwa in der Mitte zwischen dem senderfrequenten Bildträger bt+ und dem senderfrequenten Farbträger ft+ liegt.

Der Hochfrequenzmischer hm enthält die Signalverarbeitungsstufe s, die mit dem dritten und dem vierten Mischungssignal gespeist ist (nicht gezeigt) und das FBAS-Signal fbs in Basisbandlage erzeugt.

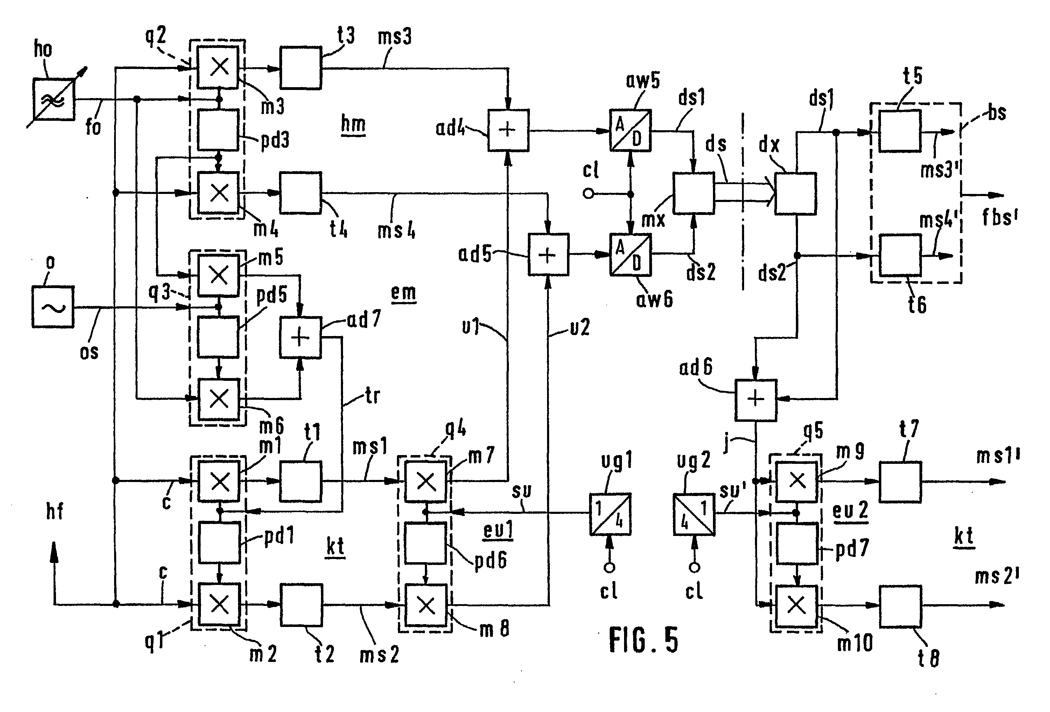

Fig. 5 zeigt, wie in weiterer Ausgestaltung der Erfindung die Mischungssignale des Hochfrequenzmischers hm und der Kanaltrennschaltung kt gemeinsam digitalisiert und zur eigentlichen Verarbeitung wieder getrennt werden können.

Dadurch ergibt sich als Hauptvorteil dieser Anordnung, daß der dritte und der vierte Tiefpaß t3, t4 nicht mehr wie in Fig. 2 im Signalweg der Tonsignale liegen, wo diese durch die beiden Tiefpässe in der Amplitude vor der Analog-Digital-Wandlung abgesenkt werden, was an sich unerwünscht ist. Ein weiterer Vorteil besteht darin, daß die dabei entstehenden Daten über einen gemeinsamen Datenbus geführt werden können, was die jeweilige Anzahl der Anschlüsse der beteiligten integrierten Schaltungen reduziert. Ferner kann die Anzahl der verwendeten Analog-Digital-Wandler durch die gemeinsame Digitalisierung reduziert werden.

Die Kanaltrennschaltung kt enthält wie in Fig. 1 eingangsseitig den ersten Quadraturmodulator q1 mit der ersten und der zweiten Mischereinheit m1, m2. Diesen ist als das Kompositsignal c jeweils das HF-Signal hf eingangsseitig zugeführt. Die erste bzw. die zweite Mischereinheit m1, m2 speist mit ihrem Ausgangssignal den ersten bzw. den zweiten Tiefpaß t1, t2. Dieser erzeugt das erste bzw. das zweite Mischungssignal ms1, ms2, welche dem vierten Quadraturmodulator q4 zugeführt sind. Dieser mischt mittels des Umsetzungssignals su das erste und das zweite Mischungssignal ms1, ms2 in dessen Frequenzlage. Die Frequenz des Umsetzungssignals su ist bevorzugt gleich einem Viertel der Frequenz des Systemtakts cl, der dem ersten Umsetzungsgenerator ug1 zugeführt ist und durch ihn frequenzgeteilt wird.

Das HF-Signal hf ist ferner den beiden Eingängen des zweiten Quadraturmodulators q2 und darin dem jeweils einen Eingang der dritten bzw. der vierten Mischereinheit m3, m4 zugeführt. Der andere Eingang der dritten Mischereinheit m3 ist ferner mit dem Oszillatorsignal fo aus dem Oszillator ho gespeist, der ebenfalls die dritte Phasendrehstufe pd3 im zweiten Quadraturmodulator q2 speist. Deren Ausgangssignal ist dem anderen Eingang der vierten Mischereinheit m4 und dem Eingang des dritten Quadraturmodulators q3 zugeführt.

Der dritte Quadraturmodulator q3 mit der fünften und der sechsten Mischereinheit m5, m6 sowie mit der fünften Phasendrehstufe pd5 stellt zusammen mit dem siebten Addierer ad7 den Einseitenbandmischer em dar, der die Frequenz des Oszillators ho und die des Mischungsoszillators o, dessen Ausgangssignal des Mischungsoszillatorsignal os ist, addiert und dabei das Trennsignal tr mit dieser Summenfrequenz erzeugt.

Das Oszillatorsignal fo ist hierzu dem einen Eingang der sechsten Mischereinheit m6 direkt und dem der fünften Mischereinheit m5 um 90 Grad in der Phase gedreht zugeführt. Für diese Phasendrehung wird die dritte Phasendrehstufe pd3 im zweiten Quadraturmodulator q2 mitbenutzt, die das Oszillatorsignal fo bereits entsprechend dreht.

Dem jeweils anderen Eingang der fünften Mischereinheit m5 und der fünften Phasendrehstufe pd5 ist das Mischungsoszillatorsignal os zugeführt. Ferner speist die fünfte Phasendrehstufe pd5 die sechste Mischereinheit m6, deren Ausgangssignal sowie das Ausgangssignal der fünften Mischereinheit m5 jeweils einem der beiden Eingänge des siebten Addierers ad7 zugeführt ist, dessen Ausgangssignal das Trennsignal tr ist. Dieses speist die erste Mischereinheit m1 und die erste Phasendrehstufe pd1 des ersten Quadraturmodulators q1.

An den Ausgang der dritten bzw. der vierten Mischereinheit m3, m4 ist der dritte bzw. der vierte Tiefpaß t3, t4 angeschlossen. Deren jeweiliger Durchlaßbereich ist gleich dem Frequenzbereich des Faltungssignals f*, und deren jeweiliges Ausgangssignal ist das dritte bzw. das vierte Mischungssignal ms3, ms4, das einem Eingang des vierten bzw. des fünften Addierers ad4, ad5 zugeführt ist. Deren jeweils anderer Eingang ist mit dem Ausgangssignal der siebten bzw. der achten Mischereinheit m7, m8, die im vierten Quadraturmodulator q4 enthalten sind, gespeist, welches das erste bzw. das zweite Umsetzungssignal u1, u2 darstellt. Der vierte Quadraturmodulator q4 enthält ferner die sechste Phasendrehstufe pd6, die eingangsseitig mit der siebten Mischereinheit m7 und mit dem ersten Umsetzsignalgenerator ug1 sowie ausgangsseitig mit der achten Mischereinheit m8 verbunden ist.

Das Ausgangssignal des vierten bzw. des fünften Addierers ad4, ad5 ist mittels des fünften bzw. des sechsten Analog-Digitalwandlers aw5, aw6 digitalisiert, dem der Systemtakt cl zugeführt ist und deren jeweiliges Ausgangssignal der erste bzw. der zweite Datenstrom ds1, ds2 ist, die den Multiplexer mx speisen. Dessen Ausgangssignal ist der gemeinsame Datenstrom ds, der codiert über einen einzigen Datenbus geführt werden kann, an den weitere Schaltungen angeschlossen sind, und der den Demultiplexer dx speist. Dessen Ausgangssignale sind wieder der erste und der zweite Datenstrom ds1, ds2, die jeweils einem Eingang der Bildsignalverarbeitungsstufe bs zugeführt sind und dort eingangsseitig den fünften bzw. den sechsten Tiefpaß t5, t6 speisen.

Deren jeweiliger Durchlaßbereich ist etwa gleich dem Frequenzbereich des Faltungssignals f*. Ferner umfaßt deren jeweiliger Sperrbereich neben der Unterdrückung von störenden Nachbarkanälen einen Sperrbereich für die Frequenz des Umsetzungssignals su. Das Ausgangssignal der beiden Tiefpässe t5, t6 ist das digitalisierte dritte bzw. vierte Mischungssignal ms3', ms4', aus dem mittels der digitalen Bildsignalverarbeitungsstufe bs als deren Ausgangssignal das digitalisierte FBAS-Signal fbs' erzeugt wird.

Durch Rückumsetzung wird aus dem ersten bzw. dem zweiten Datenstrom ds1, ds2 wieder das erste bzw. das zweite Mischungssignal ms1, ms2 der Kanaltrennstufe erzeugt. Dazu wird der erste bzw. der zweite Datenstrom ds1, ds2 mittels des sechsten Addierers ad6 addiert, dessen Ausgangssignal j dem jeweils einen Eingang der neunten bzw. der zehnten Mischereinheit m9, m10 innerhalb des fünften Quadraturmodulators q5 zugeführt ist. Deren jeweiliger anderer Eingang ist mit dem digitalen Umsetzungssignal su' bzw. mit dem Ausgangssignal der siebten Phasendrehstufe pd7, der eingangsseitig ebenfalls das digitale Umsetzungssignal su' zugeführt ist, gespeist. Dieses ist mittels des zweiten Umsetzungssignalgenerators ug2 erzeugt, der an den Systemtakt cl angeschlossen ist und einen Frequenzteiler mit der Teilungszahl 4 enthält.

Weil es sich bei dem zweiten Einseitenbandumsetzer eu2 mit dem fünften Quadraturmodulator q5 um eine Schaltung handelt, welche digitale Signale verarbeitet, handelt es sich auch bei dem zweiten Umsetzungssignalgenerator ug2 um eine Digitalschaltung. Wegen des ganzzahligen Frequenzverhältnisses zwischen dessen Eingangs- und Ausgangssignal ergibt sich eine besonders einfache Realisierung. Im einfachsten Fall nimmt das digitale Umsetzungssignal su' nur drei verschiedene Werte an, wobei der eine Wert null ist und die beiden anderen Werte sich nur im Vorzeichen unterscheiden.

Der sechste Addierer ad6 kann selbstverständlich auch direkt an den fünften und an den sechsten Analog-Digitalwandler aw5, aw6 angeschlossen sein, insbesondere wenn kein gemeinsamer Datenstrom ds mittels des Multiplexers mx erzeugt werden soll. Das Ausgangssignal j des sechsten Addierers ad6 ist unten zusammen mit Fig. 7e erläutert.

Der Ausgang der neunten bzw. der zehnten Mischereinheit m9, m10 ist mit dem siebten bzw. mit dem achten Tiefpaß t7, t8 verbunden, dessen Ausgangssignal das digitalisierte erste bzw. zweite Mischungssignal ms1', ms2' der Kanaltrennschaltung kt ist. Der Durchlaß- und der Sperrbereich des siebten bzw. des achten Tiefpasses entsprechen dabei denjenigen des ersten bzw. des zweiten Tiefpasses t1, t2.

Die weitere Verarbeitung des ersten bzw. des zweiten digitalisierten Mischungssignals ms1', ms2' ist in Fig. 5 nicht mehr gezeigt, entspricht aber der in Fig. 1 gezeigten und oben beschriebenen weiteren Verarbeitung zur Erzeugung des ersten bzw. des zweiten Tonsignals ts1, ts2.

In Fig. 6a ist schematisch das Spektrum des Kompositsignals c und die Frequenz des zugehörigen Trennsignals tr dargestellt. Neben dem Spektrum des ersten bzw. des zweiten Tonkanals mit dem ersten bzw. zweiten Komposittonträger tc1, tc2 liegt der Spektralbereich des Videosignals vs. Um den ersten bzw. zweiten Komposittonträger tc1, tc2 liegt jeweils der Bereich des frequenzmodulierten ersten bzw. zweiten Tonkanals. Genau in der Mitte zwischen dem ersten und dem zweiten Komposittonträger tc1, tc2 liegt die Frequenz des Trennsignals tr.

Fig. 6b zeigt das mittels des Trennsignals tr in das Basisband gefaltete Kompositsignal c* nach dem ersten bzw. dem zweiten Tiefpaß t1, t2, nämlich das erste bzw. das zweite Mischungssignal ms1, ms2. Das Spektrum des Videosignals vs ist mittels des ersten und des zweiten Tiefpasses t1, t2 unterdrückt. Übriggeblieben ist der frequenzgleiche Bereich des ersten und zweiten Tonkanals um den ersten bzw. den zweiten transformierten Komposittonträger tc1*, tc2*. Deren Frequenz liegt bei 125 kHz. Da der Frequenzhub +/– 50 kHz beträgt, erstreckt sich der Spektralbereich des ersten und des zweiten Tonkanals von 75 bis 175 kHz. Die Trennung dieser beiden frequenzgleichen Tonkanäle bzw. deren "Entfaltung" erfolgt mittels des ersten Addierers ad1 bzw. des ersten Subtrahierers sb1.

Fig. 6c zeigt als Beispiel für das entfaltete Komposittonsignal das Addiersignal p des ersten Addierers ad1. Um den ersten Tonträger tt1 bei 125 kHz erstreckt sich der Bereich des ersten frequenzmodulierten Tonkanals von 75 kHz bis 175 kHz.

Fig. 7a zeigt in vereinfachter Form und schematisch das Spektrum des HF-Signals hf, das auf die Frequenz des senderfrequenten Bildträgers bt+ normiert ist. Das Spektrum des Videosignals vs erstreckt sich als senderfrequent übertragenes Restseitenband von –1,25 MHz bis +5 MHz. Der senderfrequent übertragene Farbträger ft+ ist vereinfacht bei 4,4 MHz dargestellt. Oberhalb des Videosignalspektrums liegt der senderfrequent übertragene Träger des ersten bzw. des zweiten Tonkanals tt1+, tt2+ bei 5,5 MHz bzw. angenähert bei 5,75 MHz.

Ferner ist das Oszillatorsignal fo dargestellt, das in der Mitte zwischen dem senderfrequenten Bildträger bt+ und dem senderfrequenten Farbträger ft+ bei der hier normierten Frequenz 2,2 MHz liegt. Das Oszillatorsignal fo gehört allerdings nicht zum HF-Signal hf.

Bei der Zwischenfrequenz-Mischerschaltung, mittels der das HF-Signal hf als Kompositsignal c in einen Zwischenfrequenzbereich umgesetzt wird, der zwischen dem Frequenzbereich des HF-Signals hf und dem des Basissignals f liegt, liegt die gleiche schematische Spektralverteilung wie beim Kompositsignal c vor, nur daß sie zu niederen Frequenzen hin verschoben ist.

Fig. 7b zeigt das Basissignal f in der Basisbandlage. Ausgehend von der Frequenz 0 Hz erstreckt sich das Spektrum des Videosignals vs bis 5 MHz. Bei 4,4 MHz (s.o.) liegt der Farbträger ft, bei 5,5 MHz liegt der erste Tonträger tt1 und bei 5,75 MHz (s.o.) liegt der zweite Tonträger tt2. Um den ersten bzw. den zweiten Tonträger tt1, tt2 erstreckt sich der mit +/- 50 kHz Frequenzhub modulierte erste bzw. zweite Tonkanal, der aber nicht dargestellt ist.

Fig. 7c zeigt in vereinfachter schematischer Form das Spektrum des Faltungssignals f*, das dem dritten bzw. dem vierten Mischungssignal ms3, ms4 entspricht. Durch die Faltung mit dem Oszillatorsignal fo ist das Spektrum im Basisband teilweise doppelt belegt. Das Spektrum des HF-Signals hf erscheint dabei um das Oszillatorsignal fo zu höheren Frequenzweiten hin "umgeklappt", wobei nach der Faltung das Oszillatorsignal fo selbst gar nicht mehr erscheint, weil dieses in den Frequenzursprung 0 Hz transformiert ist.

Das Spektrum unterhalb des Oszillatorsignals fo mit dem Restseitenband erstreckt sich im Faltungssignal f* von 0 bis 3,45 MHz. Dessen oberes Ende liegt damit zwischen dem ersten und dem zweiten transformierten Tonträger tt1* bzw. tt2*, der bei 3,3 MHz bzw. 3,55 MHz liegt. Der ursprünglich oberhalb des Oszillatorsignals fo liegende Spektralbereich des Videosignals vs erstreckt sich von 0 bis 2,8 MHz. Bei 2,2 MHz liegen der transformierte Bildträger bt* und der transformierte Farbträger ft*.

Fig. 7d zeigt in vereinfachter Form die eine Spektralhälfte f1* des Faltungssignals f*, welche den oberen Spektralteil des Videosignals vs und den ersten und den zweiten transformierten Tonträger tt1*, tt2* enthält. Die andere Hälfte des Faltungssignals f* ist dabei nach der "Phasenmethode" unterdrückt.

Ferner ist das Trennsignal tr dargestellt, das in der Mitte zwischen dem ersten und dem zweiten transformierten Tonträger tt1*, tt2* bei der hier normierten Frequenz 3,425 MHz liegt. Das Trennsignal selbst gehört nicht zum Faltungssignal f*.

Fig. 7e zeigt das Ausgangssignal j des sechsten Addierers ad6. Ausgehend von 0 Hz ist die obere Hälfte des Videosignalspektrums vs mit dem transformierten Bildträger bt* und dem transformierten Farbträger ft* bei der Frequenz 2,2 MHz zu sehen. Die obere Grenze des Videosignalspektrums liegt bei 2,8 MHz. Im Frequenzabstand von 125 kHz oberhalb und unterhalb des zusätzlich bei 4,4 MHz eingezeichneten Umsetzungssignals su befindet sich der erste bzw. der zweite umgesetzte Tonträger tu1, tu2 bei einer Frequenz von 4,275 MHz bzw. 4,525 MHz.

Die Frequenzumsetzung, bei der das HF-Signal hf mittels des Oszillatorsignals fo dadurch umgesetzt ist, daß die Frequenz des Oszillatorsignals fo die genaue Mittenfrequenz zwischen der Frequenz des senderfrequenten Bildträgers bt+ und des senderfrequenten Farbträgers ft+ ist, wird auch als Zentralfaltung bezeichnet und ist in der Offenlegungsschrift DE-A 3 313 867 beschrieben. Bei dieser Zentralfaltung entsteht in den beiden beteiligten Signalwegen durch Ungleichheiten ein Störsignal, das sich als störendes Moiré auf dem Fernsehschirm zeigt.

Eine Methode, dieses störende Moiré für den Fernsehbetrachter unsichtbar zu machen, ist in der zeitgleich angemeldeten europäischen Patentanmeldung EP-A 213 221 beschrieben.

Dabei ist das Oszillatorsignal fo nicht mehr auf die genaue Mittenfrequenz zwischen dem senderfrequenten Bildträger bt+ und dem senderfrequenten Farbträger ft+ eingestellt, sondern es weist einen Frequenzversatz auf, für den folgende Werte gelten:

a) beim PAL-Farbfernseh-Standard:
−(3/8 + n)fz oder +(5/8 + n)fz.
b) beim NTSC-Farbfernseh-Standard:
−(1/4 + n)fz oder +(3/4 + n)fz.

Dabei ist:
n = 0, 1, 2, 3..., fz die Zeilenfrequenz und mit "−" bzw. "+" die Richtung des Frequenzversatzes zu niedrigeren bzw. höheren Frequenzwerten hin bezeichnet. Dieser Frequenzversatz läßt sich in Ausgestaltung der Erfindung ebenfalls anwenden.

## Patentansprüche

1. Fernsehtonempfangsschaltung für mindestens einen tonträgerfrequent übertragenen und in einem HF-Signal (hf) enthaltenen Tonkanal, das außerdem ein mittels eines Bildträgers (bt+) und eines Farbträgers (ft+) senderfrequent übertragenes FBAS-Signal (fbs) (= Farb-Bild-Austast-Synchron-Signalgemisch) enthält, mit einer Kanaltrennschaltung (kt), die auch der Frequenzmodulation des mindestens einen Tonkanals dient, gekennzeichnet durch folgende Merkmale:
- die Kanaltrennschaltung (kt) enthält eine Einseitenbanddemodulatorschaltung nach der "Phasenmethode" mit jeweils einem Ausgang für ein erstes und ein zweites Seitenband und weist folgende Teilschaltungen auf:
  - einen ersten Quadraturmodulator (q1) mit einer ersten Phasendrehstufe (pd1) und mit einer ersten bzw. einer zweiten Mischereinheit (m1, m2), dem als zu mischende Signale ein Kompositsignal (c) und ein Trennsignal (tr) zugeführt sind, wobei das Kompositsignal (c) einen ersten Komposittonträger (tc1) oder einen ersten und einen zweiten Komposittonträger (tc1, tc2) enthält,
  - einen ersten bzw. einen zweiten Tiefpaß (t1, t2), der am ersten bzw. am zweiten Ausgang des ersten Quadraturmodulators (q1) angeschlossen ist und dessen Ausgangssignal ein erstes bzw. ein zweites Mischungssignal (ms1, ms2) ist, das ggf. verstärkt ist, und dessen Durchlaßbereich mindestens der Bandbreite jeweils eines um seinen Tonträger (tt1; tt2) in einem Basissignal (f) frequenzmodulierten Tonkanals entspricht, wobei der Sperrbereich so bemessen ist, daß störende Nachbarsignale unterdrückt sind,
  - eine um 90° drehende, zweite Phasendrehstufe (pd2), die dem ersten bzw. dem zweiten Tiefpaß (t1, t2) nachgeschaltet ist und deren Ausgang den einen Eingang eines ersten Addierers (ad1) bzw. den Minuend-Eingang eines ersten Subtrahierers (sb1) speist, dessen anderer bzw. dessen Subtrahend-Eingang jeweils mit dem Ausgang des zweiten Tiefpasses (t2) verbunden ist,
  - einen ersten Frequenzdemodulator (dm1), dem das Addiersignal (p) des ersten Addierers (ad1) zugeführt und dessen Ausgangssignal das Tonsignal (ts1) des ersten Tonkanals in gehörrichtiger Frequenzlage ist, und
  - einen zweiten Frequenzdemodulator (dm2), dem das Ausgangssignal des ersten Subtrahierers (sb1) zugeführt und dessen Ausgangssignal das Tonsignal (ts2) des zweiten Tonkanals in gehörrichtiger Frequenzlage ist,
- das HF-Signal (hf) speist entweder unmittelbar als Kompositsignal (c) die Kanaltrennschaltung (kt), oder
- das HF-Signal (hf) speist als Eingangssignal einen Umsetzer (u), der über eine Kombinationsschaltung (k) das Kompositsignal (c) als deren Ausgangssignal erzeugt, und
- die Frequenz des Trennsignals (tr) ist so eingestellt, daß sie bei vorhandenem erstem und zweitem Komposittonträger (tc1, tc2) etwa in der Mitte zwischen deren Frequenzen liegt bzw. daß sie bei allein vorhandenem erstem Komposittonträger (tc1) diese gleiche Frequenzablage gegenüber dem ersten Komposittonträger (tc1) hat (Fig. 1).

2. Fersehtonempfangsschaltung nach Anspruch 1, gekennzeichnet durch folgende Merkmale:
- bei der unmittelbaren Einspeisung des HF-Signals (hf) in die Kanaltrennschaltung (kt) ist das Trennsignal (tr) in einem Einseitenbandmischer (em) erzeugt, dem als Eingangssignal ein Oszillatorsignal (fo) und ein Mischungsoszillatorsignal (os) eines Mischungsoszillators (o) zugeführt sind, deren Summenfrequenz die Frequenz des Trennsignals (tr) ist,
- das Oszillatorsignal (fo) ist das Ausgangssignal eines Oszillators (ho) und dient mittels eines Hochfrequenzmischers (hm) dazu, das HF-Signal (hf) in der Frequenz zu erniedrigen, und
- die Frequenz des Mischungsoszillators (o) ist eine Festfrequenz, deren Wert etwa die Mittenfrequenz zwischen der Frequenz eines ersten und eines zweiten transformierten Tonträgers (tt1*, tt2*) in einem Faltungssignal (f*) ist, wobei der zweite transformierte Tonträger (tt2*) real nicht vorhanden zu sein braucht (Fig. 4).

3. Fernsehtonempfangsschaltung nach Anspruch 1, dadurch gekennzeichnet, daß der Umsetzer (u) eine Zwischenfrequenz-Mischerschaltung ist, die das HF-Signal (hf) als Kompositsignal (c) in einen Zwischenfrequenzbereich umsetzt, der zwischen dem Frequenzbereich des HF-Signals (hf) und dem des Basissignals (f) liegt.

4. Fernsehtonempfangsschaltung nach Anspruch 1, gekennzeichnet durch folgende Merkmale:
- der Umsetzer (u) enthält folgende Teilschaltungen:
  - einen zweiten Quadraturmodulator (q2) mit einer dritten bzw. einer vierten Mischereinheit (m3, m4) und mit einer dritten Phasendrehstufe (pd3), dem das HF-Signal (hf) und das Oszillatorsignal (fo) zugeführt ist, dessen Frequenz innerhalb des HF-Signalspektrums etwa in der Mitte zwischen dem senderfrequenten Bildträger (bt+) und dem senderfrequenten Farbträger (ft+) liegt,
  - einen dritten bzw. einen vierten Tiefpaß (t3, t4), der am ersten bzw. am zweiten Ausgang des zweiten Quadraturmodulators (q2) angeschlossen ist und dessen Ausgangssignal ein drittes bzw. ein viertes Mischungssignal (ms3, ms4) ist, das ggf. verstärkt ist, und dessen Durchlaßbereich etwa gleich der Bandbreite des Faltungssignals (f*) und sein Sperrbereich so bemessen ist, daß die Nachbarkanäle des Fernsehsignals normgerecht weit abgesenkt sind, und
  - eine Signalverarbeitungsstufe (s), die mit dem dritten und dem vierten Mischungssignal (ms3, ms4) gespeist ist und das FBAS-Signal (fbs) in der üblichen Basisbandlage erzeugt, und

- die Kombinationsschaltung (k) ist eingangsseitig mit dem dritten und dem vierten Mischungssignal (ms3, ms4) gespeist.

5. Fernsehtonempfangsschaltung nach Anspruch 4, dadurch gekennzeichnet, daß die Kombinationsschaltung (k) einen zweiten Addierer (ad2), einen Radizierer (ra) und einen ersten bzw. einen zweiten Quadrierer (qr1, qr2) enthält, dessen jeweils zwei Eingängen das dritte bzw. das vierte Mischungssignal (ms3, ms4) zugeführt ist und dessen jeweiliger Ausgang mit dem einen bzw. anderen Eingang des zweiten Addierers (ad2) verbunden ist, wobei dessen Ausgangssignal dem Radizierer (ra) zugeführt ist, dessen Ausgangssignal, das Kompositsignal (c), auch das Basissignal (f) ist (Fig. 2).

6. Fernsehtonempfangsschaltung nach Anspruch 4, dadurch gekennzeichnet, daß die Kombinationsschaltung (k) einen dritten Addierer (ad3) oder einen zweiten Subtrahierer und eine um 90° drehende, vierte Phasendrehstufe (pd4) enthält, dessen einem Eingang das dritte Mischungssignal (ms3) zugeführt ist und dessen anderer Eingang am Ausgang der vierten Phasendrehstufe (pd4) liegt, deren Eingang das vierte Mischungssignal (ms4) zugeführt ist, und daß das Ausgangssignal des dritten Addierers (ad3), das Kompositsignal (c), die eine Spektralhälfte (f1*) des Faltungssignals (f*) ist, welche mindestens den ersten transformierten Tonträger (tt1*, tt2*) enthält (Fig. 3).

7. Fernsehtonempfangsschaltung nach Anspruch 2, dadurch gekennzeichnet, daß der Hochfrequenzmischer (hm) teilweise identisch mit der Umsetzerschaltung (u) nach Anspruch 4 ist und folgende Teilschaltungen enthält:
- den zweiten Quadraturmodulator (q2) mit der dritten bzw. der vierten Mischereinheit (m3, m4) und mit der dritten Phasendrehstufe (pd3), dem das HF-Signal (hf) und das Oszillatorsignal (fo) zugeführt ist, dessen Frequenz innerhalb des HF-Signalspektrums etwa in der Mitte zwischen dem senderfrequenten Bildträger (bt+) und dem senderfrequenten Farbträger (ft+) liegt,
- den dritten bzw. den vierten Tiefpaß (t3, t4), der am ersten bzw. am zweiten Ausgang des zweiten Quadraturmodulators (q2) angeschlossen ist und dessen Ausgangssignal das dritte bzw. das vierte Mischungssignal (ms3, ms4) ist, das ggf. verstärkt ist, wobei der Durchlaßbereich des dritten bzw. des vierten Tiefpasses (t3, t4) etwa gleich der Bandbreite des Faltungssignals (f*) und sein Sperrbereich so bemessen ist, daß die Nachbarkanäle des Fernsehsignals normgerecht weit abgesenkt sind, und
- eine Signalverarbeitungsstufe (s), die mit dem dritten und dem vierten Mischungssignal (ms3, ms4) gespeist ist und ein FBAS-Signal (fbs) in der Basisbandlage erzeugt (Fig. 4).

8. Fernsehtonempfangsschaltung nach einem der Ansprüche 4 bis 7, dadurch gekennzeichnet, daß das Oszillatorsignal (fo) gegenüber der genauen Mittenfrequenz zwischen dem senderfrequenten Bildträger (bt+) und dem senderfrequenten Farbträger (ft+) einen Frequenzversatz aufweist, für den folgende Werte gelten:
a) beim PAL-Farbfernseh-Standard:

−(3/8 + n)fz oder +(5/8 + n)fz
b) beim NTSC-Farbfernseh-Standard
−(1/4 + n)fz oder +(3/4 + n)fz,
wobei n = 0, 1, 2, 3..., mit fz die Zeilenfrequenz bezeichnet ist und "−" bzw. "+" die Richtung des Frequenzversatzes zu niedrigeren bzw. höheren Frequenzwerten hin bedeutet.

9. Fernsehtonempfangsschaltung nach Anspruch 4, dadurch gekennzeichnet, daß das dritte bzw. das vierte Mischungssignal (ms3, ms4) mittels eines ersten bzw. eines zweiten Analog-Digital-Wandlers (aw1, aw2) digitalisiert ist.

10. Fernsehtonempfangsschaltung nach einem der Ansprüche 1, 2 oder 7, gekennzeichnet durch folgende Merkmale:
- das erste bzw. das zweite Mischungssignal (ms1, ms2) ist in einem dritten bzw. einem vierten Analog-Digital-Wandler (aw3, aw4) digitalisiert, und
- die Erzeugung des jeweils analogen ersten bzw. zweiten Tonsignals (ts1, ts2) erfolgt mittels eines ersten bzw. eines zweiten Digital-Analog-Wandlers (dw1, dw2), der dem Ausgang des ersten bzw. des zweiten Frequenzdemodulators (dm1, dm2) nachgeschaltet ist (Fig. 1).

11. Fernsehtonempfangsschaltung nach Anspruch 7, gekennzeichnet durch folgende Merkmale:
- einem ersten Einseitenbandumsetzer (eu1) ist das erste und das zweite Mischungssignal (ms1, ms2) sowie ein Umsetzungssignal (su) zugeführt, dessen Frequenz ein ganzzahliger Bruchteil, insbesondere ein Viertel, der Frequenz des die Digitalisierung steuernden Systemtakts (cl) ist,
- einem vierten Addierer (ad4) ist ein fünfter Analog-Digital-Wandler (aw5) nachgeschaltet, und seinem einem bzw. anderem Eingang ist das erste Ausgangssignal des ersten Einseitenbandumsetzers (eu1) als erstes umgesetztes Mischungssignal (u1) bzw. das dritte Mischungssignal (ms3) zugeführt
- einem fünften Addierer (ad5) ist ein sechster Analog-Digital-Wandler (aw6) nachgeschaltet, und seinem einen bzw. anderen Eingang ist das zweite Ausgangssignal des ersten Einseitenbandumsetzers (eu1) als zweites umgesetztes Mischungssignal (u2) bzw. das vierte Mischungssignal (ms4) zugeführt,
- das Ausgangssignal des fünften bzw. sechsten Analog-Digital-Wandlers (aw5, aw6) ist als erster bzw. zweiter Datenstrom (ds1, ds2)
- entweder mit dem ersten bzw. dem zweiten Eingang einer Multiplexerschaltung (mx), deren Ausgang datenmäßig, den Eingang eines Demultiplexers (dx) speist, zugeführt, der wieder den ersten und den zweiten Datenstrom (ds1, ds2) als Ausgangssignale erzeugt, welche den einen bzw. den anderen Eingang einer digitalen Bildsignalverarbeitungsstufe (bs) und den einen bzw. den anderen Eingang eines sechsten Addierers (ad6) speisen,
- oder dem einen bzw. dem anderen Eingang der digitalen Bildsignalverarbeitungsstufe (bs) und dem einen bzw. dem anderen Eingang des sechsten Addierers (ad6) direkt zugeführt,

- die digitale Bildsignalverarbeitungsstufe (bs) enthält jeweils eingangsseitig einen fünften bzw. einen sechsten Tiefpaß (t5, t6) mit einem Sperrbereich für die Frequenz des Umsetzungssignals (su) und einem Durchlaßbereich, der etwa die Bandbreite des Faltungssignals (f*) umfaßt, und
- das Ausgangssignal (j) des sechsten Addierers (ad6) und ein zum Umsetzungssignal (su) frequenzgleiches digitales Umsetzungssignal (su') sind dem einen bzw. dem anderen Eingang eines zweiten Einseitenbandumsetzers (eu2) zugeführt, dessen erstes bzw. zweites Ausgangssignal nach einer Tiefpaßfilterung in einem siebten bzw. einem achten Tiefpaß (t7, t8) ein erstes bzw. zweites digitalisiertes Mischungssignal (ms1', ms2') ist, welches dem ersten bzw. dem zweiten Mischungssignal (ms1, ms2) der Kanaltrennschaltung (kt) entspricht, wobei der Durchlaß- und der Sperrbereich des siebten und des achten Tiefpasses (t7, t8) gleich demjenigen des ersten und des zweiten Tiefpasses (t1, t2) ist (Fig. 5).

## Claims

1. Television sound receiving circuit for at least one sound channel transmitted by means of a sound carrier and contained in an RF signal (hf) which also contains a composite color signal (fbs) transmitted by means of a picture carrier (bt+) and a chrominance subcarrier (ft+), with a channel-separating circuit (kt) which also serves to frequency-modulate the at least one sound channel, characterized by the following features:
- The channel separating circuit (kt) contains a single sideband demodulator using the "phasing method" and having an output for a first sideband and an output for a second sideband, and comprises the following subcircuits:
  - a first quadrature modulator (q1) which consists of a first 90° phase-shift stage (pd1), a first mixer unit (m1), and a second mixer unit (m2) and to which a composite signal (c) and a separating signal (tr) are fed as signals to be mixed, the composite signal (c) containing a first composite sound carrier (tc1) or a first composite sound carrier (tc1) and a second composite sound carrier (tc2);
  - a first low-pass filter (t1) and second low-pass filter (t2) which are connected, respectively, to the first output and the second output of the first quadrature modulator (q1) and provide a first mixer signal (ms1) and a second mixer signal (ms2) which may be amplified, the passband of each of the first and second low-pass filters (t1, t2) being at least equal to the bandwidth of a sound channel frequency-modulated about its sound carrier (tt1; tt2) in a base signal, and the stop band being chosen to suppress signals on adjacent channels;
  - a second 90° phase-shift stage (pd2) following the first low-pass filter (t1) and having its output coupled to one input of a first adder (ad1) and to the minuend input of a first subtracter (sb1), with the other input of the first adder (ad1) and the subtrahend input of the first subtracter (sb1) connected to the output of the second low-pass filter (t2);

– a first frequency demodulator (dm1) which is supplied with the sum signal (p) of the first adder (ad1) and whose output is the sound signal (ts1) of the first sound channel in the desired audio-frequency range, and

– a second frequency demodulator (dm2) which is supplied with the output of the first subtracter (sb1) and whose output is the sound signal (ts2) of the second sound channel in the desired audio-frequency range,

– the RF signal (hf) is applied as the composite signal (c) directly to the channel-separating circuit, or

– the RF signal (hf) is applied to a converter (u) followed by a combination circuit (k) which delivers the composite signal (c), and

– the frequency of the separating signal (tr) is set so that, in the presence of the first and second composite sound carriers (tc1, tc2), it lies approximately in the middle between the frequencies of only the first composite sound carrier (tc1) (Fig. 1).

2. A television sound receiving circuit as claimed in claim 1, characterized by the following features:

– If the RF signal (hf) is fed directly to the channel-separating circuit (kt), the separating signal (tr) is produced in a single-sideband mixer (em) which is supplied with an oscillator signal (fo) and a signal (os) from a beat-frequency oscillator (o) whose sum frequency is the frequency of the separating signal (tr);

– the oscillator signal (fo) is the output signal of an oscillator (ho) and serves to reduce the frequency of the RF signal (hf) by means of a radio-frequency mixer (hm), and

– the frequency of the beat-frequency oscillator (o) is a fixed frequency approximately equal to the center frequency between the frequencies of a first transformed sound carrier (tt1*) and a second transformed sound carrier (tt2*) in a folded signal (f*), of which the second transformed sound carrier (tt2*) need not be really present (Fig. 4).

3. A television sound receiving circuit as claimed in claim 1, characterized in that the converter (u) is an intermediate-frequency mixer circuit which converts the RF signal (hf) as the composite signal (c) to an intermediate-frequency range between the frequency range of the RF signal (hf) and that of the base signal (f).

4. A television sound receiving circuit as claimed in claim 1, characterized by the following features:

– The converter (u) contains the following subcircuits:

 – a second quadrature modulator (q2) which consists of a third mixer unit (m3), a fourth mixer unit (m4), and a third 90° phase-shift stage (pd3) and is supplied with the RF signal (hf) and the oscillator signal (fo), whose frequency lies within the RF signal spectrum approximately in the middle between the transmitted picture carrier (bt+) and the transmitted chrominance subcarrier (ft+);

 – a third low-pass filter (t3) and a fourth low-pass filter (t4) which are connected, respectively, to the first and second outputs of the second quadrature modulator (q2) and whose outputs are a third mixer signal (ms3) and a fourth mixer signal (ms4), which may be amplified, the passbands of the two low-pass filters (t3, t4) being approximately equal to the bandwidth of the folded signal (f*), and their stop bands being chosen so that the adjacent channels of the television signal are separated from the said passbands in accordance with the standard, and

 – a signal-processing stage (s) which is supplied with the third and fourth mixer signals (ms3, ms4) and provides the composite color signal (fbs) in the usual baseband position, and

– the combination circuit (k) is supplied with the third and fourth mixer signals (ms3, ms4).

5. A television sound receiving circuit as claimed in claim 4, characterized in that the combination circuit (k) contains a second adder (ad2), a root solver (ra), a first squarer (qr1) and a second squarer (qr2), the two inputs of each of the two squarers (qr1, qr2) being supplied with the third mixer signal (ms3) and the fourth mixer signal (ms4), respectively, and the output of each of the squarers (qr1, qr2) being connected to one of the two inputs of the second adder (ad2), which has its output coupled to the root solver (ra), whose output, the composite signal (c), is also the base signal (f) (Fig. 2).

6. A television sound receiving circuit as claimed in claim 4, characterized in that the combination circuit (k) contains a third adder (ad3) or a second subtracter and a fourth 90° phase-shift stage (pd4) one input of which is presented with the third mixer signal (ms3) and the other input of which is connected to the output of the fourth phase-shift stage (pd4), whose input is supplied with the fourth mixer signal (ms4), and that the output of the third adder (ad3), the composite signal (c), is one half (f1*) of the spectrum of the folded signal (f*), said half containing at least the first transformed sound carrier (tt1*, tt2*) (Fig. 3).

7. A television sound receiving circuit as claimed in claim 2, characterized in that the radio-frequency mixer (hm) is partly identical with the converter circuit (u) claimed in claim 4 and contains the following subcircuits:

– the second quadrature modulator (q2), which consists of the third mixer unit (m3), the fourth mixer unit (m4), and the third 90° phase-shift stage (pd3) and is supplied with the RF signal (hf) and the oscillator signal (fo), whose frequency lies within the RF signal spectrum approximately in the middle between the transmitted picture carrier (bt+) and the transmitted chrominance subcarrier (ft+);

– the third and fourth low-pass filters (t3, t4), which are connected, respectively, to the first and second outputs of the second quadrature modulator (q2) and whose outputs are the third and fourth mixer signals (ms3, ms4), which may be amplified, the passbands of the two low-pass filters (t3, t4) being approximately equal to the bandwidth of the folded signal (f*), and their stop bands being chosen so that the adjacent channels of the television signal are separated from the said passbands in accordance with the standard, and

– a signal-processing stage (s) which is supplied with the third and fourth mixer signals (ms3, ms4) and provides the composite color signal (fbs) at baseband (Fig. 4).

8. A television sound receiving circuit as claimed in any one of claims 4 to 7, characterized in that the frequency of the oscillator signal (fo) is shifted with respect to the exact center frequency between the transmitted picture carrier (bt+) and the transmitted chrominance subcarrier (ft+) by the following amounts:

a) in the PAL color-television standard:

$-(3/8 + n)$fz or $+(5/8 + n)$fz

b) in the NTSC color-television standard:

$-(1/4 + n)$fz or $+(3/4 + n)$fz,

where n = 0, 1, 2, 3..., fz = horizontal frequency, and "–" and "+" = direction of frequency shift toward lower and higher values, respectively.

9. A television sound receiving circuit as claimed in claim 4, characterized in that the third mixer signal (ms3) and the fourth mixer signal (ms4) are digitized by means of a first analog-to-digital converter (aw1) and a second analog-to-digital converter (aw2), respectively.

10. A television sound receiving circuit as claimed in claim 1, 2 or 7, characterized by the following features:

– The first mixer signal (ms1) and the second mixer signal (ms2) are digitized by means of a third analog-to-digital converter (aw3) and a fourth analog-to-digital converter (aw4), respectively, and

– the first analog sound signal (ts1) and the second analog sound signal (ts2) are produced by means of first and second digital-to-analog converters (dw1, dw2) connected to the outputs of the first frequency demodulator (dm1) and the second frequency demodulator (dm2), respectively (Fig. 1).

11. A television sound receiving circuit as claimed in claim 7, characterized by the following features:

– A first single-sideband converter (eu1) is supplied with the first and second mixer signals (ms1, ms2) and a conversion signal (su) whose frequency is an integral fraction, preferably one quarter, of the frequency of the system clock (c1) controlling the digitization;

– a fourth adder (ad4) is followed by a fifth analog-to-digital converter (aw5), and its two inputs are supplied with the first output signal of the first single-sideband converter (eu1), representing a first converted signal (u1), and the third mixer signal (ms3), respectively;

– a fifth adder (ad5) is followed by a sixth analog-to-digital converter (aw6), and its two inputs are supplied with the second output signal of the first single-sideband converter (eu1), representing a second converted signal (u2), and the fourth mixer signal (ms4), respectively;

– the outputs of the fifth and sixth analog-to-digital converters (aw5, aw6) are fed as a first data stream (ds1) and a second data stream (ds2), respectively,

– either to the first and second inputs of a multiplexer (mx) whose output feeds the input of a demultiplexer (dx) delivering the first and second data streams (ds1, ds2), which are fed, respectively, to the two inputs of a digital picture-signal-processing stage (bs) and to the two inputs of a sixth adder (ad6),

– or directly to the two inputs of the digital picture-signal-processing stage (bs) and to the two inputs of the sixth adder (ad6);

– the digital picture-signal-processing stage (bs) contains in its input portion a fifth low-pass filter (t5) and a sixth low-pass filter (t6) with a stop band for the frequency of the conversion signal (su) and a passband approximately equal to the bandwidth of the folded signal (f*), and

– the output signal (j) of the sixth adder (ad6) and a digital conversion signal (su') equal in frequency to the conversion signal (su) are each applied to one of the two inputs of a second single-sideband converter (eu2) whose first and second outputs, after being filtered in a seventh low-pass filter (t7) and an eighth low-pass filter (t8), respectively, represent a first digitized mixer signal (ms1'), corresponding to the first mixer signal (ms1) of the channel-separating circuit (kt), and a second digitized mixer signal (ms2'), corresponding to the second mixer signal (ms2) of the channel-separating circuit (kt), with the pass and stop bands of the seventh and eighth low-pass filters (t7, t8) being equal to those of the first and second low-pass filters (t1, t2,) (Fig. 5).

## Revendications

1. Circuit de réception de son de télévision pour au moins un canal son transmis à la fréquence de la porteuse son et contenu dans un signal HF (hf), et comprenant en outre un signal FBAS (fbs) (= signal composé de chrominance) transmis à une fréquence d'émetteur au moyen d'une porteuse image (bt+) et d'une sous-porteuse de chrominance (ft+), comprenant un circuit de séparation des canaux (kt), qui sert également à la modulation de fréquence dudit au moins un canal son, caractérisé en ce que:

– le circuit de séparation de canaux (kt) comprend un circuit de démodulation à bande latérale unique selon la "méthode de phase", comprenant respectivement une sortie pour une première et pour une deuxième bande latérale et comporte les sous-circuits suivants:

– un premier modulateur de quadrature (q1) avec un premier étage de rotation de phase (pd1) et avec une première et, respectivement, une deuxième unité de mélange (m1, m2) qui, comme signaux à mélanger, reçoit un signal composite (c) et un signal de séparation (tr), le signal composite (c) comprenant une première porteuse son composite (tc1) ou une première et une deuxième porteuse son composite (tc1, tc2),

– un premier et, respectivement, un deuxième filtre passe-bas (t1, t2), qui est connecté à la première et, respectivement, à la deuxième sortie du premier modulateur de quadrature (q1) et dont le signal de sortie est un premier et, respectivement, un deuxième signal de mélange (ms1, ms2) qui, le cas échéant, est amplifié, et dont la bande passante correspond au moins à la largeur de bande d'un canal son modulé en fréquence autour de sa porteuse son (tt1; tt2) dans un signal de base (f), la bande interdite étant calculée pour que les signaux voisins parasites soient éliminés,

– un deuxième étage de rotation de phase à 90° (pd2) qui est implanté en aval du premier et, respectivement, du deuxième filtre passe-bas (t1, t2) et dont la sortie alimente l'une des entrées d'un premier additionneur (ad1) et, respectivement, l'entrée diminuende d'un premier soustracteur (sb1) dont l'autre entrée et, respectivement, l'entrée de terme à soustraire est connectée respectivement à la sortie du deuxième filtre passe-bas (t2).

– un premier démodulateur de fréquence (dm1) auquel est transmis le signal d'addition (p) du premier additionneur (ad1) et dont le signal de sortie est le signal audio (ts1) du premier canal son dans une position de fréquence audible, et

– un deuxième démodulateur de fréquence (dm2) auquel est transmis le signal de sortie du premier soustracteur (sb1) et dont le signal de sortie est le signal audio (ts2) du deuxième canal son dans une position de fréquence audible,

– le signal HF (hf) alimente le circuit de séparation de canaux (kt) soit directement sous la forme d'un signal composite (c), soit

– le signal HF (hf) alimente, sous la forme d'un signal d'entrée, un convertisseur (u) qui, par l'intermédiaire d'un circuit de combinaison (k), produit le signal composite (c) comme signal de sortie dudit circuit de combinaison (k), et

– la fréquence du signal de séparation (tr) est réglée de manière qu'en présence d'une première et d'une deuxième porteuse son composite (tc1, tc2), elle se trouve sensiblement au milieu des fréquences de ces dernières et, respectivement, qu'en présence uniquement d'une première porteuse son composite (tc1), elle possède le même décalage de fréquence par rapport à la première porteuse son composite (tc1) (figure 1).

2. Circuit de réception de son de télévision conforme à la revendication 1, caractérisé en ce que:

– en cas de transmission directe du signal HF (hf) au circuit de séparation de canaux (kt), le signal de séparation (tr) est produit dans un mélangeur à bande latérale unique (em) auquel sont transmis, comme signal d'entrée, un signal d'oscillateur (fo) et un signal d'oscillateur de mélange (os) d'un oscillateur de mélange (o) dont la fréquence de sommation est la fréquence du signal de séparation (tr),

– le signal d'oscillateur (fo) est le signal de sortie d'un oscillateur (ho) et sert, au moyen d'un mélangeur à haute fréquence (hm), à abaisser la fréquence du signal HF (hf), et

– la fréquence de l'oscillateur de mélange (o) est une fréquence fixe dont la valeur est sensiblement la fréquence médiane entre la fréquence d'une première et d'une deuxième porteuse son transformée (tt1*, tt2*) dans un signal de pliage (f*), l'existence réelle de la deuxième porteuse son transformée (tt2*) n'étant pas impérative (figure 4).

3. Circuit de réception de son de télévision conforme à la revendication 1, caractérisé en ce que le convertisseur (u) est un circuit de mélange à fréquence intermédiaire qui convertit le signal HF (hf), en tant que signal composite (c), dans une gamme de fréquence intermédiaire se trouvant entre la gamme de fréquence du signal HF (hf) et celle du signal de base (f).

4. Circuit de réception de son de télévision conforme à la revendication 1, caractérisé en ce que:

– le convertisseur (u) comprend les sous-circuits suivant:

– un deuxième modulateur de quadrature (q2) associé à une troisième et, respectivement, une quatrième unité de mélange (m3, m4) et à un troisième étage de rotation de phase (pd3), auquel sont transmis le signal HF (hf) et le signal d'oscillateur (fo) dont la fréquence se trouve, à l'intérieur du spectre de signal HF, sensiblement au milieu de la porteuse image (bt+) à la fréquence de l'émetteur et de la sous-porteuse de chrominance (ft+) à la fréquence de l'émetteur,

– un troisième et, respectivement, un quatrième filtre passe-bas (t3, t4) qui est connecté à la première et, respectivement, à la deuxième sortie du deuxième modulateur de quadrature (q2) et dont le signal de sortie est un troisième et, respectivement, un quatrième signal de mélange (ms3, ms4) qui, le cas échéant, est amplifié et dont la bande passante est sensiblement égale à la largeur de bande du signal de pliage (f*) et sa bande interdite est calculée pour que les canaux voisins du signal de télévision soient abaissés conformément à la norme, et

– un étage de traitement de signaux (s) qui est alimenté avec le troisième et le quatrième signal de mélange (ms3, ms4) et qui produit le signal FBAS (fbs) dans la position de bande de base habituelle, et

– le circuit de combinaison (k) est alimenté, côté entrée, avec le troisième et le quatrième signal de mélange (ms3, ms4).

5. Circuit de réception de son de télévision conforme à la revendication 4, caractérisé en ce que le circuit de combinaison (k) comprend un deuxième additionneur (ad2), un étage d'extraction de racine carrée (ra) et un premier et, respectivement, un deuxième étage d'élévation au carré (qr1, qr2), dont les deux entrées reçoivent le troisième et, respectivement, le quatrième signal de mélange (ms3, ms4) et dont la sortie est connectée à l'une et, respectivement, à l'autre entrée du deuxième additionneur (ad2), son signal de sortie étant transmis à l'étage d'extraction de racine carrée (ra) dont le signal de sortie, le signal composite (c), est également le signal de base (f) (figure 2).

6. Circuit de reception de son de télévision conforme à la revendication 4, caractérisé en ce que le circuit de combinaison (k) comprend un troisième additionneur (ad3) ou un deuxième soustracteur et un quatrième étage de rotation de phase (pd4) qui effectue une rotation de phase de 90°, dont l'une des entrées reçoit le troisième signal de mélange (ms3) et dont l'autre entrée est connectée à la sortie du quatrième étage de rotation de phase (pd4) dont l'entrée reçoit le quatrième signal de mélange (ms4), et en ce que le signal de sortie du troisième additionneur (ad3), le signal composite (c), est l'une des moitiés spectrales (f1*) du signal de pliage (f*) qui contient au moins la première porteuse son transformée (tt1*, tt2*) (figure 3).

7. Circuit de réception de son de télévision conforme à la revendication 2, caractérisé en ce que le mélangeur à haute fréquence (hm) est partiellement identique au circuit de conversion (u) conforme à la revendication 4 et comprend les sous-circuits suivants:

– le deuxième modulateur de quadrature (q2) associé à la troisième et, respectivement, la quatrième unité de mélange (m3, m4) et au troisième étage de rotation de phase (pd3) auquel sont transmis le signal HF (hf) et le signal d'oscillateur (fo) dont la fréquence se trouve, à l'intérieur du spectre de signal HF, sensiblement au milieu de la porteuse image (bt+) à la fréquence de l'émetteur et de la sous-porteuse de chrominance (ft+) à la fréquence de l'émetteur,

– le troisième et, respectivement, le quatrième filtre passe-bas (t3, t4) qui est connecté à la première et, respectivement, à la deuxième sortie du deuxième modulateur de quadrature (q2) et dont le signal de sortie est le troisième et, respectivement, le quatrième signal de mélange (ms3, ms4) qui, le cas échéant, est amplifié, la bande passante du troisième et, respectivement, du quatrième filtre passe-bas (t3, t4) étant sensiblement égale à la largeur de bande du signal de pliage (f*) et sa bande interdite étant calculée de façon que les canaux voisins du signal de télévision soient abaissés conformément à la norme, et

– un étage de traitement de signaux (s) qui est alimenté avec le troisième et le quatrième signal de mélange (ms3, ms4) et qui produit un signal (FBAS (fbs) dans la position de bande de base (figure 4).

8. Circuit de réception de son de télévision conforme à l'une quelconque des revendications 4 à 7, caractérisé en ce que le signal d'oscillateur (fo) présente, par rapport à la fréquence médiane exacte entre la porteuse image (bt+) à la fréquence de l'émetteur et la sous-porteuse de chrominance (ft+) à la fréquence de l'émetteur, un décalage de fréquence auquel les valeurs suivantes sont applicables:

a) pour la norme de télévision PAL:
$-(3/8 + n)fz$ ou $+(5/8 + n)fz$.

b) pour la norme de télévision NTSC:
$-(1/4 + n)fz$ ou $+(3/4 + n)fz$

où $n = 0, 1, 2, 3...$, fz est la fréquence de lignes et "–" ou, respectivement, "+" désigne la direction du décalage de fréquence vers des valeurs de fréquence inférieures ou, respectivement, supérieures.

9. Circuit de réception de son de télévision conforme à la revendication 4, caractérisé en ce que le troisième et, respectivement, le quatrième signal de mélange (ms3, ms4) est numérisé au moyen d'un premier et, respectivement, d'un deuxième convertisseur analogique/numérique (aw1, aw2).

10. Circuit de réception de son de télévision conforme à l'une des revendications 1, 2 ou 7, caractérisé en ce que:

– le premier et, respectivement, le deuxième signal de mélange (ms1, ms2) est numérisé dans un troisième et, respectivement, un quatrième convertisseur analogique/numérique (aw3, aw4), et

– la production du premier et, respectivement, deuxième signal audio analogique (ts1, ts2) s'effectue au moyen d'un premier et, respectivement, deuxième convertisseur numérique/analogique (dw1, dw2) qui est connecté en aval de la sortie du premier et, respectivement, deuxième démodulateur de fréquence (dm1, dm2) (figure 1).

11. Circuit de réception de son de télévision conforme à la revendication 7, caractérisé en ce que:

– un premier convertisseur à bande latérale unique (eu1) reçoit le premier et le deuxième signal de mélange (ms1, ms2) ainsi qu'un signal de conversion (su) dont la fréquence est une fraction entière, en particulier un quart, de la fréquence de l'impulsion de synchronisation (c1) commandant la numérisation,

– un quatrième additionneur (ad4) est suivi d'un cinquième convertisseur analogique/numérique (aw5) et l'une et, respectivement, l'autre de ses entrées reçoit le premier signal de sortie du premier convertisseur à bande latérale unique (eu1) comme premier signal de mélange converti (u1) et, respectivement, troisième signal de mélange (ms3)

– un cinquième additionneur (ad5) est suivi d'un sixième convertisseur analogique/numérique (aw6) et l'une et, respectivement, l'autre de ses entrées reçoit le deuxième signal de sortie du premier convertisseur à bande latérale unique (eu1) comme deuxième signal de mélange converti (u2) et, respectivement, quatrième signal de mélange (ms4),

– le signal de sortie du cinquième et, respectivement, sixième convertisseur analogique/numérique (aw5, aw6) est transmis, comme premier et, respectivement, deuxième flux de données (ds1, ds2)

– soit à la première et, respectivement, deuxième entrée d'un circuit de multiplexage (mx) dont les données de sortie alimentent l'entrée d'un démultiplexeur (dx) qui produit à nouveau le premier et le deuxième flux de données (ds1, ds2) comme signaux de sortie qui alimentent l'une et, respectivement, l'autre entrée de l'un des étages numériques de traitement de signal d'image (bs) et l'une et, respectivement, l'autre entrée d'un sixième additionneur (ad6),

– soit directement à l'une et, respectivement, l'autre entrée de l'étage numérique de traitement de signal d'image (bs) et à l'une et, respectivement, l'autre entrée du sixième additionneur (ad6),

– l'étage numérique de traitement de signal d'image (bs) comporte, côté entrée, un cinquième et, respectivement, un sixième filtre passe-bas (t4, t6) avec une bande interdite pour la fréquence du signal de conversion (su) et une bande passante qui englobe sensiblement la largeur de bande du signal de pliage (f*), et

– le signal de sortie (j) du sixième additionneur (ad6) et un signal de conversion numérique (su') de même fréquence que le signal de conversion (su) sont envoyés à l'une et, respectivement, l'autre entrée d'un deuxième convertisseur à bande latérale unique (eu2) dont le premier et, respectivement, deuxième signal de sortie est, après passage dans un septième et, respectivement, huitième filtre passe-bas (t7, t8), un premier et, respectivement, deuxième signal de mélange numérisé (ms1', ms2') qui correspond au premier et, respectivement, deuxième signal de mélange (mu1, ms2) du circuit de séparation de canaux (kt), la bande passante et la bande interdite du septième et du huitième filtre passe-bas (t7, t8) étant égales à celles du premier et, respectivement, deuxième filtre passe-bas (t1, t2) (figure 5).

FIG. 1

FIG. 4

FIG. 3

EP 0 213 222 B1

FIG. 2

FIG. 6

FIG. 5

EP 0 213 222 B1

FIG. 7